# EUROPEAN PATENT APPLICATION

(11) **EP 1 429 556 A1**
(43) Date of publication of application: **16.06.2004**
(21) Application number: 02027450.2
(22) Date of filing: 10.12.2002
(51) Int. Cl.: H04N 7/14

(54) **Modular portable camera device**

(71) Applicant: Sony Ericsson Mobile Communications AB, 221 88 Lund (SE)
(72) Inventor: Söderlund, Marcus, 11540 Stockholm (SE); Cahier, Johan, 14147 Huddinge (SE)
(74) Representative: Dahnér, Christer

(57) **Abstract**

The present invention is directed towards a modular portable image captioning device comprising an image captioning control actuator (38), a first module (22) including a lens (26) and a digital image receiving unit (40), a second module (10) including a display (14) for showing non-captured digital images and a variable distance connection unit (32). The first module is separate from and directly connectable to the second module via the variable distance connection unit (32) and arranged to transfer non-captured digital images to the display for letting a user select a view via the display for which a finalised digital image can be captured and stored using the image captioning control actuator. With the invention images that are obscured can still be captured.

## Description

### TECHNICAL FIELD OF THE INVENTION

The present invention relates to the field of capturing of images and more particularly to a modular portable image captioning device.

### DESCRIPTION OF RELATED ART

Cameras and other image captioning devices have increasingly become smaller and smaller and are nowadays often present in portable electronic devices like cellular phones. There also exist plug-in modules containing cameras, which can be plugged into cellular phones and then be used for taking pictures. SonyEricsson has for instanced the products CommuniCam™ MCA-10 and CommuniCam™ MCA-20, which can be plugged into the system connector of different phone models. The display of the phone then works as a viewfinder for the camera and pictures can be taken. Such pictures can thereafter be included in messages sent from the phone, like for instance MMS messages. When the camera is present in for instance a phone, it occupies space, which makes the phone bulkier than it has to be. When such modules are plugged into the phone the combination of plug-in device and phone does also become bulky and awkward to hold for a user. This is not advantageous when using the phone as a camera, since then it has to be easy to hold in the hand.

Another problem that might arise is that a user wishing to take a picture might have the view to an object he wishes to photograph obstructed. Such obstructions can be in the form of crowds of people, walls or other objects obstructing the view. In order to solve this the user will now have to raise the phone with or without plug-in device and take a picture without knowing the result. In many cases photographing is the art of catching a moment. If this is not done right the first time, the moment or object photographed might be lost, why this solution to the problem is not really satisfactory in many situations.

Nokia has a product called Camera Headset HS-1C. In this product a digital VGA camera and a headset are combined into a single unit, which can be connected to a cellular phone. The phone is not used before taking pictures, but already taken pictures can later be viewed on the screen of the phone.

There exist cameras that can be used for photographing on a distance. However many suck solutions require rather complex systems. One such example is mentioned in US 6,400,903. This solution uses a network over which a computer remotely controls a camera. This cannot really be used when for instance trying to photograph wild animals, where a network might not be available. This is also a rather expensive device not suitable for use in small handheld devices for the consumer market.

There is thus a need for being able to capture images with a small and simple device where the image captioning unit and the display showing the scene to be captured in an image can be separated from each other when used.

### SUMMARY OF THE INVENTION

The present invention is therefore directed towards solving the problem of enabling capturing of images, when the view to the scene to be captioned in an image is obscured.

This is generally solved by separating the module capturing the image from the display showing the image to be captured also when being used.

One object of the present invention is thus directed towards providing a portable image captioning device, that can be used for captioning images of obscured objects.

Another object of the present invention is to provide a portable image captioning device that is less bulky and easy to hold in the hands of a user.

According to a first aspect of the present invention, these objects are achieved by a modular portable image captioning device comprising:
an image captioning control actuator,
a first module including a lens and a digital image receiving unit,
a second module including a display for showing non-captured digital images, and
a variable distance connection unit,
wherein the first module is separate from and directly connectable to the second module via the variable distance connection unit and arranged to transfer non-captured digital images to the display for letting a user select a view via the display for which a finalised digital image can be captured and stored via the image captioning control actuator.

A second aspect of the present invention includes the features of the first aspect, wherein the variable distance connection unit is a cord.

A third aspect of the present invention includes the features of the first aspect, wherein the variable distance connection unit comprises two short range high-frequency communication units provided in the first and second modules, respectively.

A fourth aspect of the present invention includes the features of the first aspect, wherein the image captioning control actuator is provided in the first module.

A fifth aspect of the present invention includes the features of the first aspect, wherein the image captioning control actuator is provided in the second module.

A sixth aspect of the present invention includes the features of the first aspect, wherein the first module includes a reduction unit for reducing non-captured digital images delivered to the second module.

A seventh aspect of the present invention includes the features of the first aspect, further including an image storing unit for storing finalised images.

An eighth aspect of the present invention includes the features of the seventh aspect, wherein the image storing unit is provided in the first module.

A ninth aspect of the present invention includes the features of the eighth aspect, wherein the image storing unit is provided in the second module.

A tenth aspect of the present invention includes the features of the first aspect, wherein the second module is a portable electronic device.

An eleventh aspect of the present invention includes the features of the tenth aspect, wherein the first module is a hands-free unit at least including speakers.

A twelfth aspect of the present invention includes the features of the tenth aspect, wherein the portable electronic device is a cellular phone.

The present invention has many advantages. Because of the modular construction, each module can be small, which means that the modules are easy to hold in the hand. In the embodiment where the second module is a cellular phone this means that it can be made smaller in size. Because of the separable construction of the device according to the invention images can be viewed before being captured although the line-of -sight of a user may be blocked. The invention furthermore allows a free rotation of the first module in relation to the second module, which will give a possibility to vary angles from which a scene is captured without making a user of the device having to take up a strange positions with his body.

With the expression variable distance connection unit is meant a connection unit allowing variable distances between the two modules, while still allowing communication between them.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
fig. 1 schematically shows a top view of a cellular phone,
fig. 2 schematically shows a top view of a hands-free unit for connection to the phone of fig. 1,
fig. 3 schematically shows a bottom view of parts of the hands-free unit in fig. 2,
fig. 4 schematically shows a block schematic of the two modules according to a first embodiment of the invention,
fig. 5 schematically shows a top view of an alternative hands-free unit, and
fig. 6 schematically shows a block schematic of the two modules according to a second embodiment of the invention.

### DETAILED DESCRIPTION OF EMBODIMENTS

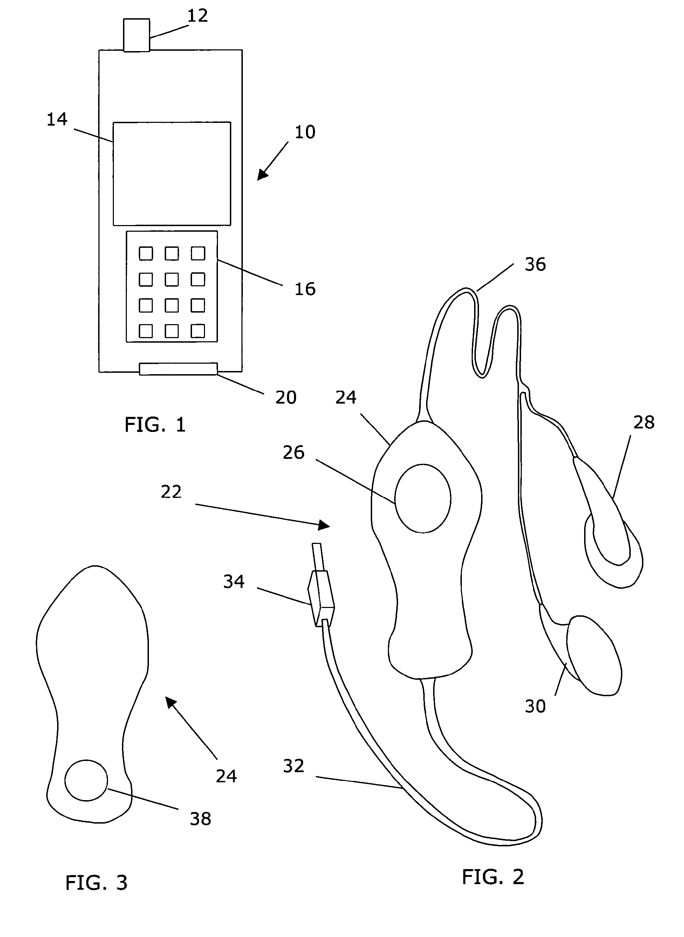

The present invention relates to a modular portable image captioning device having a first and a second module. In fig. 1 there is shown a top view of a second module in the form of a cellular phone. This phone 10 includes an antenna 12 for communication with other phones and devices over a cellular network, a display 14, which preferably is a liquid crystal display, a key pad 16 including a number of keys and a system connector 20 for connection of accessories. A cellular phone is just one example of this second module. The second module can also be a portable electronic device such as a lap top computer, a palm top computer, an electronic organizer, a smartphone, a communicator or a gaming machine. It has to include a display though in order be used according to the invention. The display does not have to be an LCD either.

Fig. 2 shows a top view of a first module according to the invention. This module is a hands-free unit 22. The hands-free unit 22 includes a main portion 24 including a camera of which a lens 26 is shown. The hands-free unit also includes a pair of earphones 28 and 30 connected to the main portion 24 via a cord 36. A connector 34 for connection to the system connector 20 of the phone is connected to the main portion 24 with a cord 32. The connector 34 includes terminals for transmitting sound as well as terminals for transmitting images. The first module 22 does not have to include earphones, but it is convenient to combine camera and earphones into one module in order to avoid too many different modules. The system connector is furthermore often of limited size, why it is often not possible to connected more than one device to the phone at one time when using cords.

Fig. 3 shows a bottom view of the hands-free device 22, where an image captioning control actuator in the form of a button 38 is provided. The button functions as a shutter release for the camera.

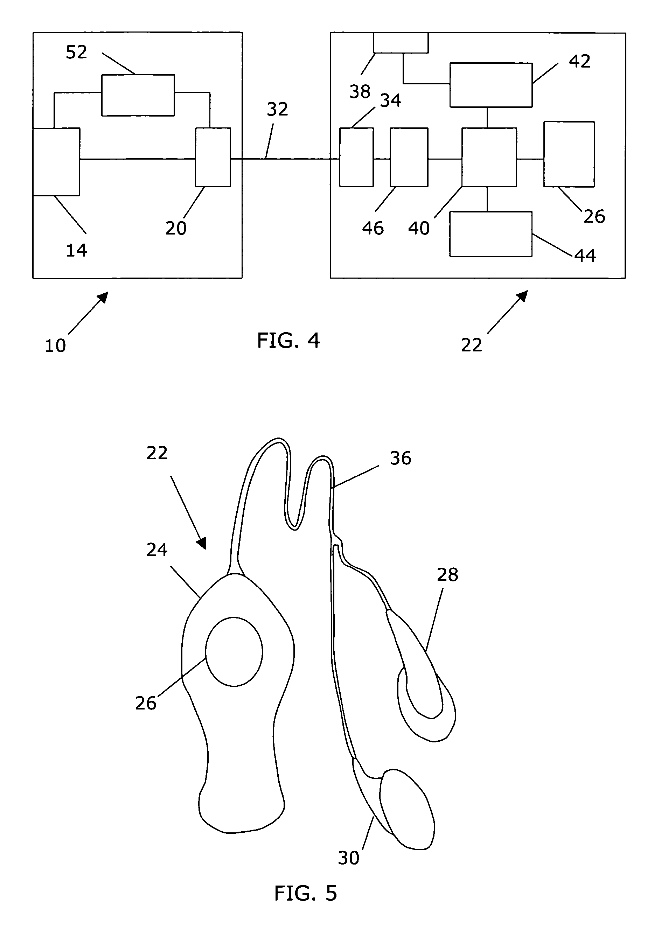

Fig. 4 shows a block schematic of the two modules 10, 22 interconnected via the cord 32. In the figure all different units and devices related to the picking up and transmission of sound have been omitted. It should however be realised that they are included in both the modules. The first module 22 includes a lens 26 connected to a digital image receiving unit 40, which converts a projected image into a digital picture. The digital image receiving unit 40 is connected to an image store 28, to a first control unit 28 and to an image reduction unit 46. The image captioning control actuator 38 is also connected to the first control unit 42. The image reduction unit 46 is connected to a first interfacing unit 34, which is connected to a second interfacing unit 20 in the second module 10 via the cord 32. The first interfacing unit 34 is here the connector of the hands-free device shown in fig. 2, while the second interfacing unit is the system connector of the phone shown in fig. 1. In the second module 10, the second interfacing unit 20 is connected to the display 14 and to a second control unit 52. Also the display 14 is connected to the second control unit 52. The cord allows the two modules to communicate, while allowing them to occupy different spatial positions in relation to each other. The cord is therefore one type of variable distance connection unit. Other types are cables and flexible wires.

When the camera is being used, the lens 26 is made to capture an instant image. The instant image is temporarily captured by the image receiving unit 40 under the control of the first control unit 42. The instant image is also provided to the image reduction unit 46, which reduces the complexity of the image so that it comprises less information than when first received. This reduced image is then transferred to the phone over the cord 32, where it is presented on the display 14 under the control of the second control unit 52. The user can then see the reduced image on the display, which thus functions as a view-finder. When the user finds that the image is satisfactory, he presses the button 38. The first control unit 42 receives an input signal from the button indicating that the instant image is to be captured and therefore makes the image receiving unit 40 store the instant image as a picture in the image store 44.

It should be realised that an image stored in this way can then be transferred to the phone for storing in a suitable image store there (not shown) and can then be used in different applications like for instance in sending MMS messages.

Because of the cord 32 the first module can be moved relative to the second module 10 such that images can be captured even though the view to them is blocked. This is of great advantage if the object for which an image is to be captured is not within the line-of sight of a user of the device. In this case he can raise or lower the first module with one hand, while holding the second module with his other such that a view to be captured can be seen on the display. The user can then at will push the button 38 when the object of the image is as desired. This invention is thus of great advantage when the object is blocked. Such blocking can take place when there is for instance a crowd or a wall or some other type of object/objects obstructing the view. Other advantages are that the first module can be placed at a relatively free location in relation to the second device, the location only being limited by the length of the cord. This also means that a user can take pictures of scenes from strange angles without having to bend over to see the scene. He can just hold the first module at the wanted angle and at a desired distance from the second module while holding the second module in a postion where the display is comfortable to watch and capture an image that would otherwise be hard for him to capture. The first mddule can thus be rotated and displaced almost at free will in relation to the second module.

Because the camera is placed in the hands-free device, it is furthermore possible to make the phone smaller, than it would otherwise be, which makes it easier to hold in the hand. By having the camera in the hands-free device, the user does furthermore not have to hold it in his hand since it can be connected to his ear.

The cord can have all types of different lenghts for being able to provide the different distances between the modules. The best length is normally between a half and one meter, such that the first module can be held at an arms length. At the same time the cord is not too long, which can give rise to tangling of the cord.

The use of the image reduction unit enables faster communication of instant images between the two modules. Still a sufficiently good instant image is transferred to the second module for allowing the scene of which an image is to be captured to be seen.

It should be realised that the variable distance connection unit does not have to be a cord. It can equally as well be provided in the form of a short length high-frequency wireless communication unit like a Bluetooth™ unit. Fig. 5 shows such a hands-free set 22. The difference here in relation to fig. 2 is that there is no cord, instead the main portion 22 includes a Bluetooth™ circuit (not shown).

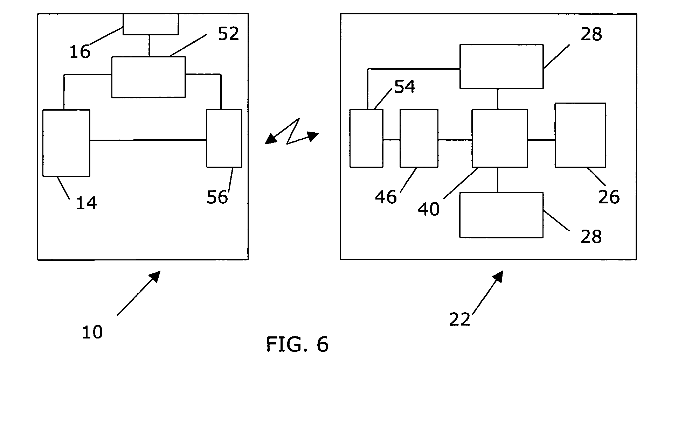

Fig. 6 shows a block schematic of the two modules according to this embodiment. The interface devices are here Bluetooth™ units 54 and 56 communicating with each other using the Bluetooth™ communication protocol. The Bluetooth™ units are thus acting as variable distance connection units. The first module 22 does not include the captioning control actuator shown in fig. 4, in all other respects the first module 22 is similar to the first module shown in fig. 4. The second module has the same type of units as was shown in fig. 4. In addition to that the keypad 16 is shown as being connected to the second control unit 52. This device works in a slightly different way. Instant images are shown in a similar way as was described in relation to fig. 4. However a key on the keypad 16 is here used as captioning control actuator. The second control unit 52 thus recognises if the key has been depressed and then signals this to the first control unit 28 via the two interface units 48 and 50. Thereafter the image is stored in the image store 28 in the previously described fashion.

With this embodiment the problem with cords that get tangled is avoided. The device is thus easier to use with this realisation.

The present invention can be varied in many ways. The image store need not be provided in the first module, but it can equally as well be provided in the second module. In this case the final image has to be transferred from the first module to the second module upon captioning. When providing the image captioning control actuator on the second module it is not necessary to use a key on the keypad as shutter release. Instead another button for instance a button on the side of the phone can be used or the display itself can be used, if it is a touch screen. The device does also not have to include the reduction unit, but can be used without it. Naturally the first embodiment using cord can be combined with the image captioning control actuator provided in the phone and the second embodiment using Bluetooth™ can be combined with the image captioning control actuator in the hands-free unit.

It should also be realised that the invention is not limited to camera and still picture applications, it can equally as well be used for video applications where moving pictures are captured. Therefore the present invention is only to be limited by the following claims.

## Claims

1. Modular portable image captioning device comprising:
an image captioning control actuator (38;16),
a first module (22) including a lens (26) and a digital image receiving unit (40), a second module ( 10) including a display (14) for showing non-captured digital images, and
a variable distance connection unit (32; 54, 56)
wherein the first module is separate from and directly connectable to the second module via the variable distance connection unit and arranged to transfer non-captured digital images to the display for letting a user select a view via the display for which a finalised digital image can be captured and stored via the image captioning control actuator.

2. Modular portable image captioning device according to claim 1, wherein the variable distance connection unit is a cord (32).

3. Modular portable image captioning device according to claim 1, wherein the variable distance connection unit comprises two short range high-frequency communication units (54, 56) provided in the first and second modules, respectively.

4. Modular portable image captioning device according to any previous claim, wherein the image captioning control actuator (38) is provided in the first module.

5. Modular portable image captioning device according to any of claims 1 - 3, wherein the image captioning control actuator (16) is provided in the second module.

6. Modular portable image captioning device according to any previous claim, wherein the first module includes a reduction unit for reducing non-captured digital images delivered to the second module.

7. Modular portable image captioning device according to any previous claim, further including an image storing unit (44) for storing finalised images.

8. Modular portable image captioning device according to claim 7, wherein the image storing unit (44) is provided in the first module.

9. Modular portable image captioning device according to claim 8, wherein the image storing unit (54) is provided in the second module.

10. Modular portable image captioning device according to any previous claim, wherein the second module is a portable electronic device.

11. Modular portable image captioning device according to claim 10, wherein the first module is provided in a hands-free unit at least including speakers (28, 30).

12. Modular portable image captioning device according to claim 10 or 11, wherein the portable electronic device is a cellular phone.
